# EUROPEAN PATENT APPLICATION

(11) **EP 4 717 069 A1**
(43) Date of publication of application: **01.04.2026**
(21) Application number: 25189285.7
(22) Date of filing: 14.07.2025
(51) Int. Cl.: A01D 41/12, A01D 41/127, B60P 1/56

(54) **UNLOADING CONTROL BASED ON IDENTIFIED HOPPER DOOR POSITION**

(30) Priority: 30.09.2024 US 202418902245
(71) Applicant: Deere & Company, Moline, IL 61265 (US)
(72) Inventor: Faust, Jeremy J, Urbandale, 50131 (US); O'Connor, Kellen E, Urbandale, 50131 (US)
(74) Representative: Reddie & Grose LLP

(57) **Abstract**

A material transfer vehicle (104) identifies the status of an unloading door (115) on a material receiving vehicle (120). A control signal is generated to control an unloading operation based upon the identified status of the unloading door (115).

## Description

### FIELD OF THE DESCRIPTION

The present description relates to agricultural equipment. More specifically, the present description relates to controlling an unloading operation based on a position of a hopper door on a container.

### BACKGROUND

There are a wide variety of different types of agricultural equipment. Some such agricultural equipment includes agricultural harvesters. Agricultural harvesters often engage crop and process that crop, and unload that crop into a material transfer vehicle, such as a tractor-pulled grain cart (for example).

Once the grain cart is filled to a desired fill level, a propulsion vehicle (such as a tractor or other vehicle) that pulls the grain cart transfers the harvested material to a container, such as a semi-trailer or other haulage vehicle. The propulsion vehicle approaches the semi-trailer, positions an unloading spout or auger, pulls alongside the semi-trailer, and then engages the unloading auger on the grain cart to unload the harvested material from the grain cart into the semi-trailer.

The discussion above is merely provided for general background information and is not intended to be used as an aid in determining the scope of the claimed subject matter.

### SUMMARY

A material transfer vehicle identifies the status of an unloading door on a material receiving vehicle. A control signal is generated to control an unloading operation based upon the identified status of the unloading door.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a partial pictorial, partial block diagram of one example of an agricultural system.
FIG. 2 is a partial pictorial partial block diagram of one example of an agricultural system.
FIG. 3 is a partial pictorial partial block diagram of one example of an agricultural system.
FIG. 4 shows one example of a view of a container or haulage vehicle.
FIG. 5 shows one example of an image captured showing an inside of a container or haulage vehicle.
FIG. 6 is a pictorial illustration of another example of a container or haulage vehicle.
FIG. 7 is a pictorial illustration of another example of a container or haulage vehicle.
FIG. 8 is a block diagram showing one example of an agricultural system architecture.
FIG. 9 is a flow diagram illustrating one example of the operation of an agricultural system architecture.
FIG. 10 is a flow diagram illustrating one example of the operation of a door status detection system.
FIG. 11 is a block diagram showing one example of an agricultural system deployed in a remote server environment.
FIGS. 12, 13, and 14 are examples of mobile devices that can be used in the architectures and systems shown in other figures.
FIG. 15 is a block diagram showing one example of a computing environment that can be used in the architectures and systems shown in other figures.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

As discussed above, it is not uncommon for an agricultural harvester to harvest material in a field and load that material into a material transfer vehicle (such as a tractor pulled grain cart for example). The material transfer vehicle then transfers the material from the agricultural harvester to a container, such as a semi-trailer or another haulage vehicle. The grain cart may have a hopper door or gate located at the bottom of the grain cart. When the grain cart receives material from the agricultural harvester, the gate or hopper door is closed so that the material does not spill onto the ground.

When the material transfer vehicle transfers the material to a container (such as a semi-trailer or other haulage vehicle), the material transfer vehicle performs an unloading operation in which material is conveyed from the grain cart to the container. In one example, the gate or hopper door on the grain cart is opened to allow material to fall to an inlet end of a conveyor or auger. The conveyor or auger conveys the material from the grain cart to the container.

Also, it is not uncommon for the container (e.g., the semi-trailer or haulage vehicle) to have one or more hopper bottoms. Each of the hopper bottoms has a hopper door. When the container receives material from the material transfer vehicle, the hopper doors are closed so that material does not spill out of the container. Then, when material is transferred from the container to a different location (such as to an elevator or to another storage location), the hopper door(s) on the hopper bottoms on the container are opened to allow the material to be transferred out of the container.

At times, the gate or hopper door of the grain cart is left open after material is transferred from the grain cart to the container. Similarly, at times, the hopper doors on the container are left open after material is emptied out of the container. The gate and hopper bottom doors may be referred to as doors or unloading doors. If the doors are not closed prior to the grain cart or container being subsequently loaded with grain, this can result in a large amount of spilled material before the doors are closed.

The present discussion thus proceeds with respect to a system that detects or otherwise identifies the state of the door or doors on a receiving vehicle or container prior to loading material into that receiving vehicle or container. In one example, the state of the doors is detected by capturing an image or other representation of the doors and performing a machine learning-based classification on that image or other representation to determine whether the doors are opened or closed. In another example, an image or representation is processed by generating a 3D point cloud corresponding to the image or representation to identify the elevation or other 3D position of points in the container. The state of the doors is identified based on an analysis of the points in the 3D point cloud. In another example, a detector on the container or receiving vehicle detects the state of the door (e.g., open or closed) and communicates the state of the doors to a machine that is about to fill the container or material receiving vehicle. Based on the state of the doors, a control system can control an unloading operation. For instance, the control system can control unloading actuators to preclude unloading of material until the state of the doors changes (e.g., from open to closed). In another example, a control signal can be generated to control an operator interface to notify an operator or provide an alert indicating that the doors are open so that corrective action can be taken prior to performing the unloading operation. In another example, a control signal can be generated to control a communication system to communicate the status of the doors to another operator or another system which can take corrective action, such as closing the doors.

It will also be noted that the present discussion can proceed with respect to an unloading operation where material is unloaded from one vehicle (e.g. an agricultural harvester) into a material transfer vehicle (such as into a grain cart). Such operations may include unloading harvested material from a combine harvester into a grain cart or other material receiving vehicle, unloading sugarcane from a sugarcane harvester into a receiving vehicle, or unloading material from a forage harvester into a cart or truck, or unloading a commodity from a tender vehicle into another vehicle or other scenarios. In all of these cases and others, where the receiving container or vehicle has a hopper door, the present system can be used to detect a state of the hopper door prior to loading the container or a material receiving vehicle. The present discussion will proceed with respect to a scenario in which the present system detects the state of a hopper door in a hopper bottom semi-trailer or haulage vehicle. This description is provided for the sake of example only, and the description could just as easily be provided with respect to the other scenarios as well.

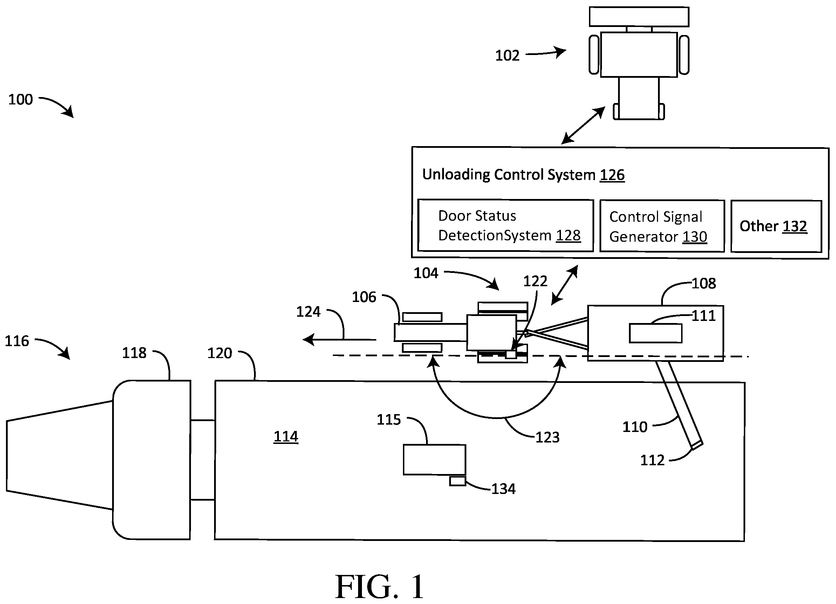

FIG. 1 is a pictorial illustration of one example of an agricultural system 100 in which a harvester 102 (e.g., a combine harvester) is harvesting material from a field. A material transfer vehicle (or transfer vehicle) 104 includes a propulsion vehicle (or tractor) 106 that is providing propulsion to (e.g., towing) a grain cart 108. The grain cart 108 illustratively has a gate or hopper door 111 in the bottom of grain cart 108. The hopper door 111 is opened to allow material to fall to an inlet end of a spout 110 that includes an auger that transfers material from the grain cart 108 up through spout 110 and out an outlet end 112 of spout 110 into a receiving area 114 of a haulage vehicle 116. Spout 110 may have a flap mounted on the distal end or the outlet end 112 to control the trajectory of material exiting spout 110. In the example shown in FIG. 1, haulage vehicle 116 includes a semi-truck that has a semi-tractor 118 coupled to a semi-trailer 120.

In operation, grain cart 108 of transfer vehicle 104 may receive harvested material from harvester 102 while harvester 102 is harvesting in the field, or while harvester 102 is stationary. When grain cart 108 is filled, (or when the harvester 102 is unloaded) transfer vehicle 104 moves into position adjacent haulage vehicle 116 so that the spout 110 can be positioned over the receiving area 114 of haulage vehicle 116 in order to transfer material from grain cart 108 to receiving area 114 of haulage vehicle 116.

In one example, transfer vehicle 104 has a sensor 122 which may be a stereo camera or other sensor (e.g. RADAR, LIDAR, etc.) that has a field of view indicated by dashed lines 123 or another sensor that senses haulage vehicle 116. For instance, sensor 122 can be on an operator compartment of tractor 106, and be a stereo camera which captures one or more images of haulage vehicle 116, along with an image processing system that processes the images to identify parts of haulage vehicle 116 (e.g., the edges or bounds of receiving area 114, the profile of haulage vehicle 116 as transfer vehicle 104 approaches haulage vehicle 116, the inside of receiving area 114, etc.). The part of haulage vehicle 116 that is identified in the images captured by sensor 122 can then be localized to a coordinate system corresponding to material transfer vehicle 104 so that the location of receiving area 114 (and the edges or bounds of receiving area 114) can be identified relative to the location of the outlet end 112 of spout 110. Based upon the location of outlet end 112 of spout 110 relative to receiving area 114, an unloading control system 128 on material transfer vehicle 104 (or elsewhere) can then control the steering and propulsion subsystems of tractor 106 in order to automatically move material transfer vehicle 104 in the direction indicated by arrow 124 into a desired location relative to haulage vehicle 116 so that the harvested material in grain cart 108 can be unloaded into receiving area 114 of haulage vehicle 116.

Receiving area 114 may have a hopper bottom with a hopper bottom door 115. Hopper bottom door 115 can be opened to empty material from haulage vehicle 116 and closed to receive material from transfer vehicle 104. Thus, door 115 is desirably closed when transfer vehicle 104 transfers material to receiving area 114, but can be inadvertently left open.

For instance, it may happen, under certain circumstances, that the last time haulage vehicle 116 was emptied of material, hopper door 115 was not closed and thus remains open. Therefore, in the example shown in FIG. 1, unloading control system 126 includes a door status detection system 128, a control signal generator 130, and other items 132. Unloading control system 126 can be deployed on tractor 106, grain cart 108, in a remote server environment, on combine harvester 102, or disposed among a plurality of different locations or distributed in other ways. In the example shown in FIG. 1, unloading control system 126 is shown as a single system for the sake of example only.

Door status detection system 128 detects or receives an indication indictive of the status of hopper door 115. The status indicates whether hopper door 115 is open or closed. In one example, sensor 122 captures an image or representation of the profile of haulage vehicle 116 as tractor 106 approaches haulage vehicle 106. As described elsewhere herein, that image may show the hopper bottom door 115 and may be classified or otherwise processed and analyzed to identify whether hopper bottom door 115 is open or closed. In another example, sensor 122 captures an image or representation of the interior of material receiving area 114. That image or representation can also be processed and analyzed to identify whether door 115 is open or closed. In yet another example, a door status detector 134 is mounted to haulage vehicle 116 to detect the status of door 115 and generate an output to door status detection system 128 (such as by using machine-to-machine communication) indicative of the status of door 115. Door status detection system 128 can identify the status of door 115 in other ways as well.

Based upon the status of door 115, control signal generator 130 generates control signals to control the unloading operation. For instance, if door status detection system 128 identifies that door 115 is open, then control signal generator 130 can generate control signals to control loading actuators (e.g., the auger in spout 110, the actuator that opens and/or closes gate or hopper door 111, the propulsion and/or steering actuators for tractor 106, or other actuators) to preclude the unloading operation from commencing until the status of door 115 changes. In another example, control signal generator 130 can generate control signals to control an operator interface on tractor 106 or semi-tractor 118 or elsewhere to alert or notify an operator that door 115 is open. In other examples, control signal generator 130 can generate a control signal to control a communication system to communicate an alert, and/or the status of door 115 to another system, to another machine, or in other ways.

Assuming that door status detection system 128 detects that door 115 is closed, then the unloading operation can be commenced. In that case, gate or hopper door 111 can be opened, the auger in spout 110 can be actuated, and material can be transferred from grain cart 108 to receiving area 114 of semi-trailer 120, while tractor 106 is controlled to move in the direction indicated by arrow 124.

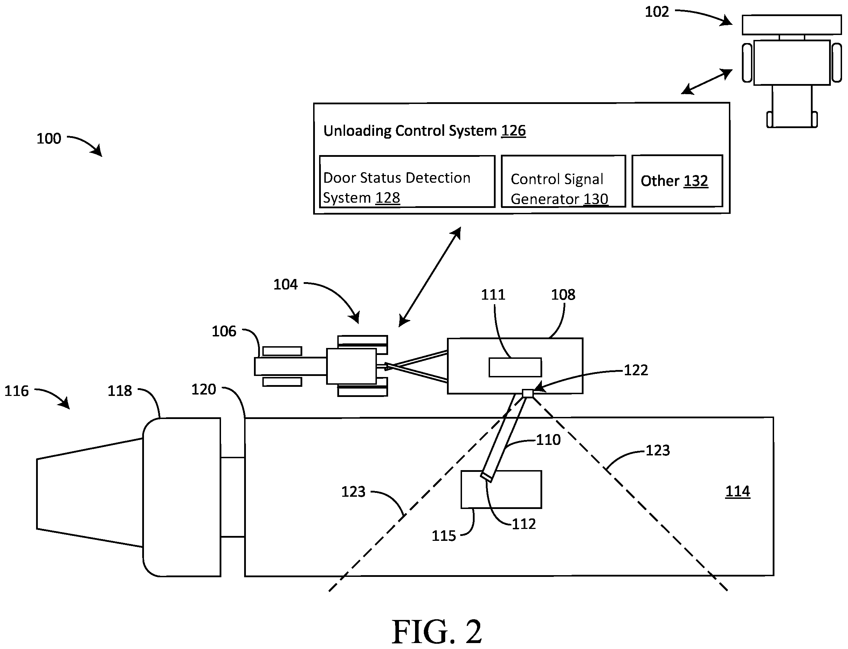

FIG. 2 is similar to FIG. 1, and similar items are similarly numbered. However, in FIG. 2, it can be seen that the sensor 122 is now disposed on grain cart 108, proximate spout 110, instead of on the operator compartment of tractor 104. It will be noted that there can be a plurality of sensors 122 and only one is shown in FIGS. 1 and 2 for the sake of example only.

Therefore, sensor 122 can be controlled to capture an image or representation of the side of haulage vehicle 116 as material transfer vehicle 104 approaches haulage vehicle 116 in order to identify the status of door 115. In another example, as material transfer vehicle 104 moves into position alongside haulage vehicle 116 (such as the position shown in FIG. 2), then sensor 122 can capture an image or representation of the inside of material receiving area 114. That image or representation can be analyzed to identify the status of door 115 as well.

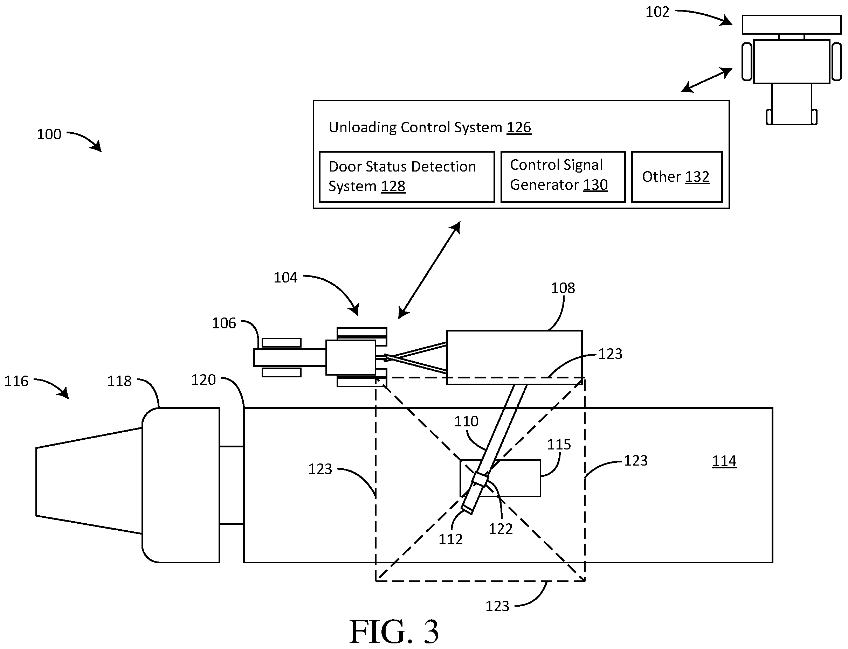

FIG. 3 is similar to FIGS. 1 and 2, and similar items are similarly numbered. However, FIG. 3 shows that image capture sensor 122 is mounted on spout 110. Therefore, the field of view 123 of sensor 122 is directed more downwardly onto receiving area 114 so that the edges or walls of receiving area 114 proximate the landing point of material exiting spout 110 can be identified in the captured images. Similarly, the opening in the bottom of receiving area 114 that is closed by door 115 can be identified in the captured images as well. Therefore, door status detection system 128 can detect the status of door 115 by analyzing the image captured by sensor 122.

It should also be noted that sensor 122 can be mounted in other ways as well. For instance, sensor 122 can be mounted on an extension arm on tractor 106 or grain cart 108 or elsewhere. The extension arm can be configured to raise sensor 122 above the edges or walls of receiving area 114 to a sufficient elevation that the field of view 123 of sensor 122 can include a portion of receiving area 114, inside of the walls thereof, so that image processing or other processing can be used to identify the status of door 115.

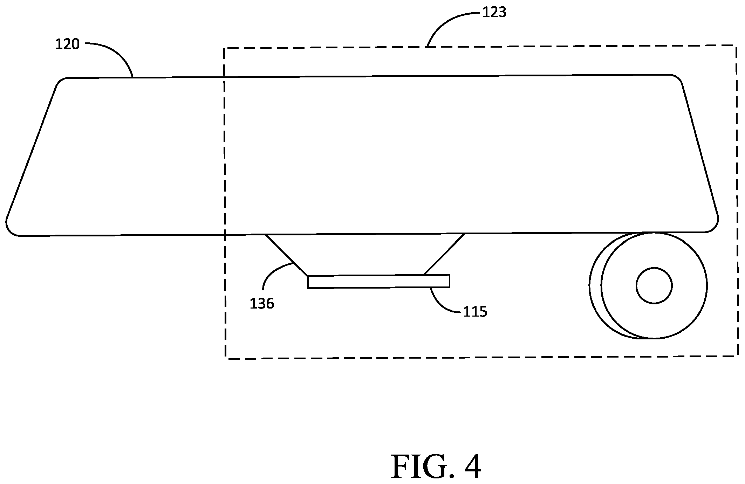

FIG. 4 is a side view of one example of semi-trailer 120, in which semi-trailer 120 is a single hopper bottom semi-trailer. Thus, semi-trailer 120 has a single hopper 136 as well as a single hopper door 115. Hopper door 115 can be actuated to move to an open position where material can fall through hopper 136 during unloading, and to a closed position where material is retained within hopper 136. In the example shown in FIG. 4, sensor 122 is illustratively arranged so that the field of view 123 includes at least the hopper 136 and hopper door 115. An image or representation of the field of view 123 can be analyzed to determine whether door 115 is in the open position or the closed position.

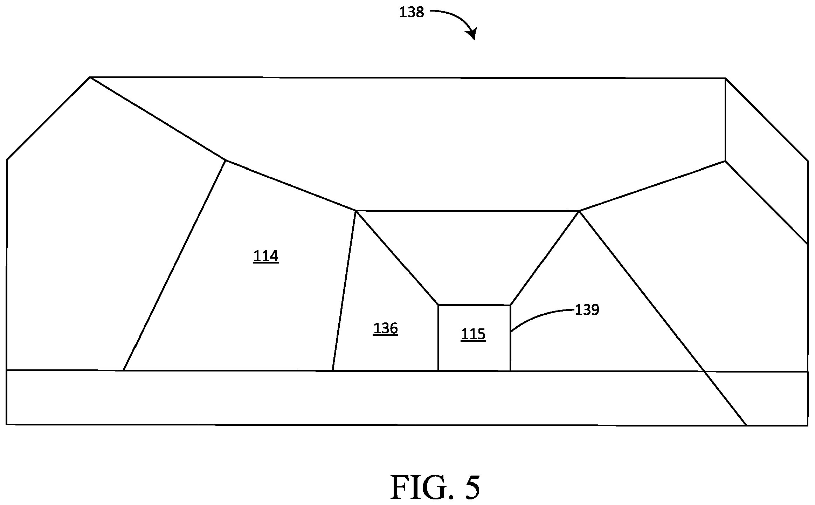

FIG. 5 shows one example of an image or representation 138 that may be captured by sensor 122 when the field of view 123 is looking down into a single hopper bottom semi-trailer 120 (e.g., the field of view is similar to that shown in FIG. 3). FIG. 5 shows that the captured image or representation illustrates the inside of hopper 136 so that the captured image or representation of the area defined by the outlet 139 of hopper 136 can be analyzed to determine whether the door 115 is open or closed. In the example shown in FIG. 5, door 115 is closed.

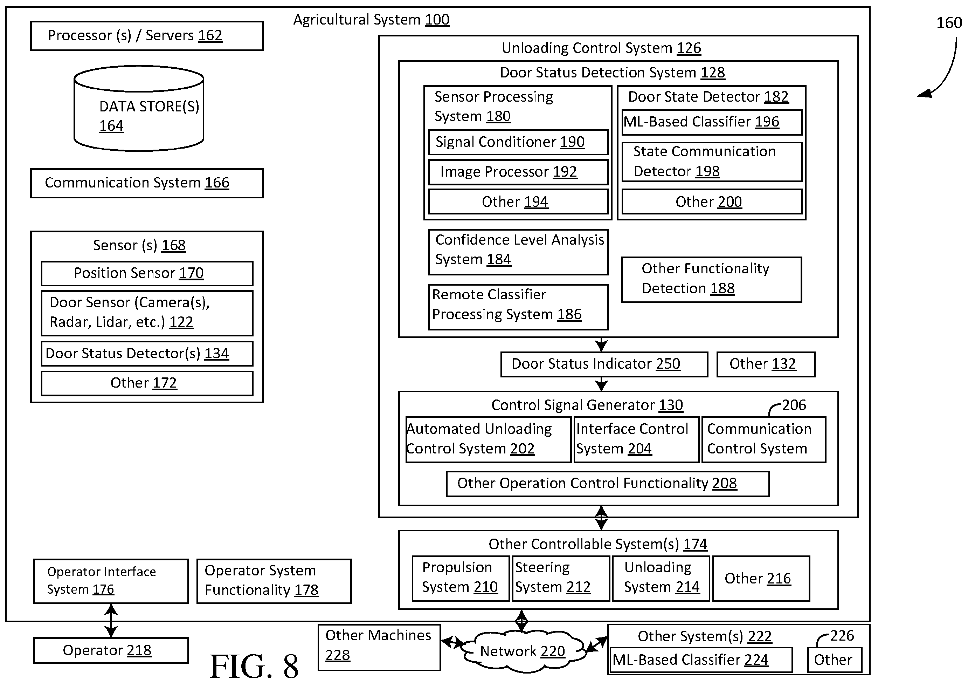

Some examples of analyzing an image or representation to identify the status of door 115 are described in greater detail below with respect to FIGS. 8, 9, and 10.

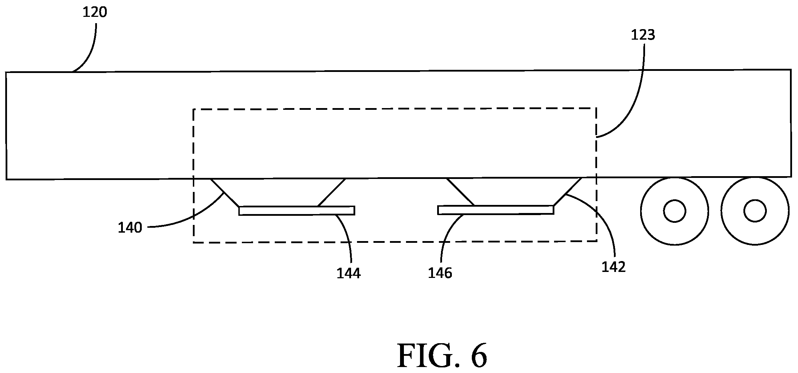

FIG. 6 is similar to some previous figures, and similar items are similarly numbered. However, FIG. 6 shows that semi-trailer 120 is a double hopper bottom trailer which has two hoppers 140 and 142, each with a corresponding door 144 and 146, respectively. Doors 144 and 146 can be moved between an open position in which material is allowed to fall through hoppers 140 and 142, and a closed position in which material is retained within hoppers 140 and 142. In the example shown in FIG. 6, the field of view 123 of sensor 122 may include the hoppers 140 and 142 as well as the corresponding hopper doors 144 and 146. The image or representation can then be analyzed to identify the status of doors 144 and 146 to determine whether those doors are open or closed.

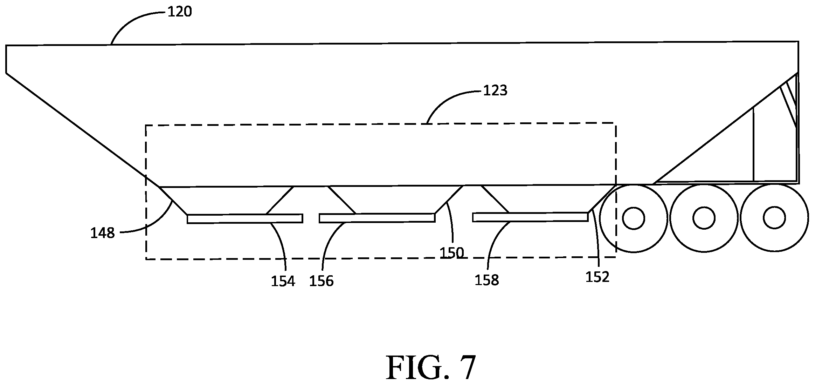

FIG. 7 is similar to FIG. 6, and similar items are similarly numbered. However, FIG. 7 shows that semi-trailer 120 is a triple hopper bottom trailer which has three hoppers 148, 150, and 152, each with a corresponding hopper bottom door 154, 156, and 158. Therefore, in one example, sensor 122 can capture an image or other representation of the field of view 123. That field of view can be analyzed to determine whether the hopper bottom doors 154, 156, and 158 are open or closed.

It will be noted that in the examples shown in FIGS. 6 and 7, sensor 122 can be configured to capture an image or representation of the inside of the semi-trailers 120. That image or representation can also be analyzed (as discussed above with respect to FIG. 5) to determine whether the hopper bottom doors are open or closed. Also, in all of the examples illustrated in FIGS. 1-7, door status detectors 134 can be configured to sense the status of each of the doors 115, 144, 146, 154, 156, and/or 158. The door status detector can generate an output indicative of the status of each door. That output can be received and processed by door status detection system 128.

FIG. 8 is a block diagram showing an agricultural system architecture 160 including some portions of agricultural system 100, in more detail. Some of the items shown in FIG. 8 are similar to those shown in previous figures, and those items are similarly numbered.

In the example shown in FIG. 8, agricultural system 100 includes one or more processors or servers 162, data store 164, communication system 166, and one or more sensors 168 which can include a position sensor 170, a sensor 122 (e.g., an image capture sensor such as a vision system sensor which may include one or more cameras, stereo cameras, a time of flight camera, a structured light camera, or another sensor which may include a RADAR sensor, a LIDAR sensor etc.), - one or more door status detectors 134, and/or other sensors 172. A time of flight camera is a range imaging camera that measures the distances between points in an image captured by the camera and the camera based on the time that a light signal (e.g., laser or LED) takes to travel to the point and back. A structured light camera captures the 3D topography of a surface using light patterns and a 2D imaging camera. Agricultural system 100 can also include unloading control system 126 which includes door status detection system 128, control signal generator 130, and other items 132, as well as other controllable systems 174, an operator interface system 176, and other system functionality 178. The example shown in FIG. 8 illustrates that door status detection system 128 can include signal processing system 180, door state detector 182, confidence level analysis system 184, remote classifier accessing system 186, and other detection functionality 188. Sensor processing system 180 can include signal conditioner 190, image processor 192, and other items or other processors 194 that process other sensor signals or representations. Door state detector 182 can include machine language (ML)-based classifier 196, state communication detector 198, and other items 200. Control signal generator 130 can include automated unloading control system 202, interface control system 204, communication control system 206, and other operation control functionality 208. Other controllable systems 174 can include propulsion system 210, steering system 212, unloading system actuators 214, and other items 216.

FIG. 8 also shows that agricultural system 100 can include an operator 218 which may be an operator of tractor 106, an operator of combine harvester 102, and/or an operator of semi-tractor 118. Operator 218 can be a human operator, an automated control system, or a semi-automated operator.

FIG. 8 also shows that agricultural system 100 can communicate over a network 220 with other systems 222 (which may include an ML-based classifier 224 or other items 226), and/or with other machines 228. Network 200 can be a wide area network, a local area network, a near field communication network, a Bluetooth or Wi-Fi network, or any of a wide variety of other networks or combinations of networks. Other systems 222 can include farm manager systems, remote server systems (e.g., cloud-based systems), manufacturer computing systems or other systems. Other machines 228 can include any of the machines illustrated in agricultural system 100 shown in previous figures, tender vehicles, maintenance vehicles, and/or any of a wide variety of other machines.

Before describing the operation of architecture 160 in more detail, a description of some of the items in architecture 160, and their operation, will first be provided.

Communication system 166 illustratively facilitates the communication of items in agricultural system 100 with one another, and may also facilitates communication over network 220. Therefore, communication system 166 can be a controller area network (CAN) bus and bus controller, a cellular communication system, a Wi-Fi, Bluetooth, or near field communications system, a wide area network communication system, a local area network communications system, or any of a wide variety of other communication systems of combinations of systems.

Sensors 168 illustratively sense different variables and generate a sensor signal indicative of the sensed variables. Position sensor 170 may be a global navigation satellite system (GNSS) receiver. Position sensor 170 can also be a dead reckoning system, a cellular triangulation system, or another position sensor that provides a location of position sensor 170 in a global or local coordinate system.

Sensor 122 can be an image capture sensor such as a camera or stereo camera, a RADAR sensor, a LIDAR sensor, or another type of sensor that has a field of view described herein. Door status detector 134 can be a Hall Effect sensor, a switch sensor, or another type of sensor that can provide an output indicative of whether the hopper bottom doors are open or closed. Thus, detectors 134 can be physical detectors, optical detectors, or other contact or non-contact detectors.

Operator interface system 176 can be disposed in the operator compartment of tractor 106, semi-tractor 118, agricultural harvester 102, or elsewhere. Operator interface system 176 includes operator interface mechanisms that can provide outputs to operator 218 and/or receive inputs from operator 218. Therefore, operator interface system 176 can include steering wheels, joysticks, levers, linkages, buttons, pedals, keyboards, point and click devices, displays, speakers, microphones, and/or other mechanisms. Operator interface system 176 can include a display screen that may display operator input mechanisms, such as icons, links, buttons, etc., that can be actuated by touch gestures, by a point and click device, by voice commands, etc. Operator interface system 176 can include other items that provide audio, visual, and/or haptic output to an operator 218 and/or that receive inputs from an operator 218.

As discussed above, unloading control system 126 can include door status detection system 128 that detects the status of the hopper bottom doors of the material receiving vehicle and can provide a door status indicator 250, indicative of the status of the hopper bottom doors, to control signal generator 130. Control signal generator 130 can generate control signals to control communication system 166, operator interface system 176, and/or other controllable systems 174.

In door status detection system 128, sensor processing system 180 receives sensor signals from one or more sensors 168 and processes those signals. Signal conditioner 190 can perform signal conditioning, such as amplification, filtering, normalization, linearization, and/or other signal conditioning operations. Image processor 192 can receive a signal from sensor 122 indicative of a captured image and perform processing on that image to identify items in the image. Image processor 192 can implement any of a wide variety of different types of image processing systems or techniques, such as image enhancement, image segmentation, image compression, image synthesis, feature extraction, among other things. Other processors 194 can process representations generated by other sensors 122, such as by LIDAR sensors, RADAR sensors, etc. Sensor processing system 180 can thus include a 3D point cloud processing system that generates a 3D point cloud based upon the image or representation to identify the elevation or location of points in the image. Sensor processing system 180 can also process the image or representation to identify items, such as a hopper, a hopper bottom door, an opening in the material receiving area 114, the side of a semi-trailer 120, among other things. Such processing can be used to perform pattern recognition, and/or any of a wide variety of other operations.

Door state detector 182 can receive an input from sensor processing system 180 indicative of a processed sensor signal or inputs from communication system 166 that receives communication from a remote system (such as communication from a communication system that communicates the output of detector 134, or other communications). Door state detector 182 detects the state of one or more hopper bottom doors under analysis based upon those inputs. ML-based classifier 196 can be any of a wide variety of different types of machine learning-based classifiers, such as a neural network, a deep neural network, a large language model classifier, or any of a wide variety of items. ML-based classifier 196 receives inputs such as a captured image or representation, features extracted from a captured image or representation, and/or other outputs from image processor 192 or signal conditioner 190, or other sensor processing systems 194 and generates a classification output indicative of the status of the hopper bottom door under analysis. For instance, ML-based classifier 196 may receive a representation of an image or representation captured by a stereo camera and/or features extracted from that image or representation and generate a classification output indicative of whether a hopper bottom door in that image or representation is open or closed. Thus, ML-based classifier 196 can be trained on images or representations of hopper bottom doors that are open and hopper bottom doors that are closed. The images or representations can be captured from a wide variety of different perspectives such as a side view of semi-trailer 120, a top view of the receiving area 114 in a semi-trailer 120, and/or any of a wide variety of other perspectives. The images or representations can also be captured of a wide variety of different vehicles with doors, such as single, double, and triple hopper bottom, or other vehicles. Based upon that training data, ML-based classifier 196 can be trained to receive an input generated from an image or representation, or the image or representation itself, and classify that image or representation to indicate whether it contains a hopper bottom door that is in the open position or the closed position.

State communication detector 198 processes communications that are received and that are indicative of the state of a hopper bottom door detected using a remote detector. For instance, the state of the hopper bottom door may be detected using a detector 134 on semi-trailer 120. The detector output can be communicated to state communication detector 198 using communication system 166 and a communication system on semi-trailer 120 or semi-tractor 118, as an example. State communication detector 198 processes that communication to determine whether it indicates that the hopper bottom door under analysis is open or closed.

The output from door state detector 182 is therefore, in one example, a door status output indicative of whether a hopper bottom door is open or closed. The output can also include a confidence indicator which indicates the confidence with which door state detector 182 has generated the door status output. For instance, ML-based classifier 196 may provide a classification output indicating that the hopper bottom door under analysis is closed and a confidence level of 70% indicating that ML-based classifier 196 is 70% sure that the classification output is correct. Confidence level analysis system 184 may analyze the confidence level to determine whether it is sufficient to proceed with processing or insufficient, in which case a larger or more comprehensive ML-based classifier 224 may be accessed in another system 222 (such as in a cloud-based system). Therefore, in one example, confidence level analysis system 184 compares the confidence level output by ML-based classifier 196 to a confidence level threshold value. If the confidence level output by ML-based classifier 196 meets the threshold value, then this may indicate that processing can proceed using the door status indicator output from ML-based classifier 196. However, if confidence level analysis system 184 determines that the confidence level output by ML-based classifier 196 does not meet the threshold value, then confidence level analysis system 184 can provide an output indicative of this to remote classifier processing system 186.

Remote classifier processing system 186 can then provide the inputs (that were previously provided to ML-based classifier 196) to communication system 166 which communicates those outputs to ML-based classifier 224 in other systems 222. ML-based classifier 224 may be a larger language model or classifier, or a more accurate classifier than ML-based classifier 196. Therefore, ML-based classifier 224 can generate a classification output indicating whether the hopper bottom door under analysis is open or closed, with a higher degree of confidence and/or with a higher level of accuracy, than ML-based classifier 196. The output from ML-based classifier 224 can then be returned through communication system 166 to remote classifier accessing system 186.

Door status detection system 128 thus generates the door status indicator 250 as either the output from door state indicator 182 (if the confidence level is high enough) or as the output received from remote ML-based classifier 224. In either case, door status indicator 250 illustratively indicates the status of the hopper bottom door under analysis (e.g., whether that door is open or closed).

Control signal generator 130 then generates control signals to control the unloading operation based upon the door status indicator 250. For instance, where the unloading operation is an automated unloading operation, the automated unloading control system 202 generates control signals to control propulsion system 210 and/or steering system 212 on tractor 106, as well as to control unloading system actuators 214 on material transfer vehicle 104. The control signal can be generated to stop the unloading process or to prevent the unloading process from commencing where door status indicator 250 indicates that the hopper bottom door is open. Otherwise, automated unloading control system 202 can generate control signals to perform the automated unloading operation to unload material from material transfer vehicle 104 into semi-trailer 120. Interface control system 204 can generate control signals to control operator interface system 176 to notify or alert operator 218 of the status of the hopper bottom door. Communication control system 206 can generate control signals to control communication system 166 to communicate the status of the hopper bottom door to another vehicle, another machine 228, other systems 222, etc. Other operation control functionality 208 can generate control signals to control other controllable systems 174 to prevent the unloading operation from commencing where the hopper bottom door is open and to enable the unloading operation to commence where the hopper bottom door is closed.

Propulsion system 210 can include a propulsion system in tractor 106 or another vehicle. The propulsion system 210 can include an internal combustion engine, one or more hydraulic motors, one or more transmissions or direct drive systems, or any of a variety of other propulsion systems. Steering system 212 can include a steering wheel and linkages to steer ground engaging elements (such as wheels) or a skid steer system to perform steering using a skid steer mechanism, such as to steer a track vehicle. Unloading system actuators 214 can be any of the actuators that are used to perform the unloading operation. For instance, the unloading actuators 214 can include an actuator that turns the auger in spout 110, an actuator that opens gate or hopper bottom door 111, one or more actuators that are used to swing spout 110 into a deployed position for unloading and to retract spout 110 into a travel position, and/or any of a variety of other unloading system actuators.

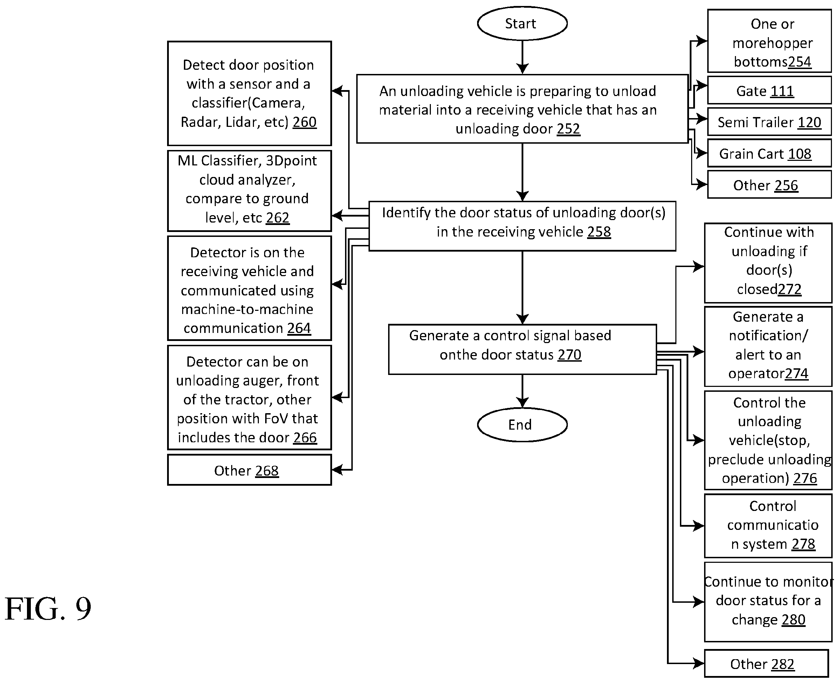

FIG. 9 is a flow diagram illustrating one example of the operation of agricultural system architecture 160 in controlling an unloading operation based upon the status of a hopper bottom door on the receiving vehicle to which material is to be loaded. It is first assumed that the unloading vehicle (e.g., material transfer vehicle 104) is preparing to unload material into a receiving vehicle that has an unloading door (e.g., semi-trailer 120 that has hopper bottom door 115). Having an unloading vehicle preparing to unload is indicated by block 252 in the flow diagram of FIG. 9. In one example, the receiving vehicle has one or more hopper bottoms with hopper bottom doors, as indicated by block 254. The hopper bottom door may be a gate 111 on the grain cart or a hopper bottom door on a semi-trailer 120 or any of a wide variety of other unloading doors on a vehicle or container that receives material, as indicated by block 256 in the flow diagram of FIG. 9.

Door status detection system 128 then detects or otherwise identifies the door status of the unloading doors on the receiving vehicle, as indicated by block 258 in the flow diagram of FIG. 9. In one example, a sensor 122 captures an image or representation of the door position and a ML-based classifier 196, 224 generates a classification output based upon the captured image or representation. The sensor 122 can include one or more cameras, a RADAR sensor, a LIDAR sensor, etc. Detecting door position with a vision system and classifier is indicated by block 260 in the flow diagram of FIG. 9.

In another example, a processing system may compare the elevation of the bottom of the semi-trailer 120 (in the area of door 115) to the ground elevation to determine whether the door is open or closed. For instance, where the captured image or representation is an image or representation of the interior of material receiving area 114 (such as that shown in FIG. 5), then the level or elevation in the region of door 115 is compared to the ground level or elevation. If the level or elevation of the image or representation in the region of door 115 is at ground level, then door 115 is open. However, if the elevation or level of the image or representation in the area of door 115 is the same as the bottom of other portions of material receiving area 114, then door 115 is closed. This comparison can be performed by the ML-based classifier 196 or using image processing or other sensor processing such as 3D point cloud analysis, or other analysis or feature extraction, as indicated by block 262 in the flow diagram of FIG. 9.

In another example, the status of the door can be detected by a detector 134 that is on the receiving vehicle and that generates an output that is communicated using machine-to-machine communication to door state detector 182, as indicated by block 264 in the flow diagram of FIG. 9. It will also be noted that the position of the detector 134 and/or sensor 122 can be in a wide variety of different locations, such as on the unloading auger 110, on the front or rear of tractor 106, on grain cart 108, and/or on any of a wide variety of other positions with a field of view that includes the door 115, as indicated by block 266 in the flow diagram of FIG. 9. The door status of the unloading door can be detected or identified in other ways as well, as indicated by block 268.

The door status indicator 250 is then output to control signal generator 130 which generates a control signal based upon the door status, as indicated by block 270 in the flow diagram of FIG. 9. In one example, where door status indicator 250 indicates that the door is closed, control signal generator 130 generates a control signal to continue or commence the unloading operation, as indicated by block 272. Where the door status indicator 250 indicates that the door is open, then interface control system 204 can generate a control signal to notify or alert operator 218 that the door is open, as indicated by block 274. For instance, when a manual operator 218 is in the operator compartment, an alert can be generated as an audio, visual, and/or haptic alert output using operator interface system 176. Automated unloading control system 202 or other operation control functionality 208 can also control the unloading system actuators 214 to stop or inhibit the unloading operation from commencing, as indicated by block 276 in the flow diagram of FIG. 9. Communication control system 206 can generate a control signal to control communication system 166 to communicate information to another system or another machine, as indicated by block 278. The door status detection system 128 can continue to monitor the door status for a change so that the control signals can be changed as well, as indicated by block 280. Any of a wide variety of other control signals can be generated to control other items, as indicated by block 282.

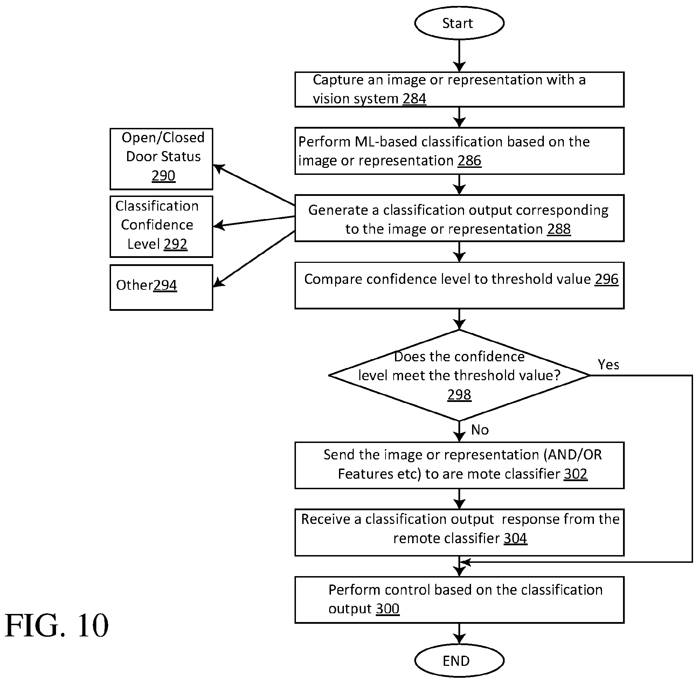

FIG. 10 is a flow diagram showing one example of the operation of door state detector 182, confidence level analysis system 184 and remote classifier processing system 186 in more detail. It is first assumed that an image or representation is captured by sensor 122 which includes a hopper door under analysis. Capturing an image or representation with sensor 122 is indicated by block 284 in the flow diagram of FIG. 10.

ML-based classifier 196 then performs ML-based classification based on the image or representation (e.g., on the image or representation itself, on features extracted from the image or representation, on items recognized in the image or representation, and/or on other properties or characteristics). Performing ML-based classification based on the image or representation is indicated by block 286 in the flow diagram of FIG. 10. ML-based classifier 196 generates a classification output corresponding to the image or representation, as indicated by block 288. In one example, the classification output includes the open/closed status of the hopper bottom door under analysis, as indicated by block 290, as well as the classification confidence level, as indicated by block 292. The classification output can include other items 294 as well.

Confidence level analysis system 184 then compares the confidence level to a threshold value as indicated by block 296. If, as determined at block 298, the confidence level meets the threshold value then the door status indicator 250 generated by door state detector 182 is output and control signal generator 130 performs unloading control based upon the classification output 250, as indicated by block 300. However, if, as determined at block 298, the confidence level generated by ML-based classifier 196 does not meet the confidence threshold, then remote classifier processing system 186 sends the image or representation and/or features or other data generated based on the image or representation, to a remote ML-based classifier 224, as indicated by block 302 in the flow diagram of FIG. 10. The remote ML-based classifier 224 may be a larger model, or a higher accuracy model, or another type of model that can be more favorably run on the cloud or in a remote server environment, rather than on a machine. Remote ML-based classifier 224 classifies the image or representation and other information and generates a classification output. The other system 222 on which ML-based classifier 224 is deployed then sends that classification output back to remote classifier. Remote classifier processing system 186 which generates the door status indicator 250 output by ML-based classifier 224 as indicated by block 304 in the flow diagram of FIG. 10. Control of the unloading operation then continues based upon that output, as again indicated by block 300.

It can thus be seen that the present description describes a system that identifies the status of a hopper bottom door on a material receiving vehicle that is about to receive material from an unloading vehicle. The unloading operation can then be controlled based upon whether the door is open or closed.

The present discussion has mentioned processors and servers. In one example, the processors and servers include computer processors with associated memory and timing circuitry, not separately shown. The processors or servers are functional parts of the systems or devices to which they belong and are activated by, and facilitate the functionality of, the other components or items in those systems.

Also, a number of user interface (UI) displays have been discussed. The UI displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, the mechanisms can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which the mechanisms are displayed is a touch sensitive screen, the mechanisms can be actuated using touch gestures. Also, where the device that displays the mechanisms has speech recognition components, the mechanisms can be actuated using speech commands.

A number of data stores have also been discussed. It will be noted the data stores can each be broken into multiple data stores. All can be local to the systems accessing the data stores, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components, generators, and/or logic. It will be appreciated that such systems, components, generators, detectors, classifiers, and/or logic can be comprised of hardware items (such as processors and associated memory, or other processing components, some of which are described below) that perform the functions associated with those systems, components, generators, detectors, classifiers, and/or logic. In addition, the systems, components, generators, detectors, classifiers, and/or logic can be comprised of software that is loaded into a memory and is subsequently executed by a processor or server, or other computing component, as described below. The systems, components, generators, detectors, classifiers, and/or logic can also be comprised of different combinations of hardware, software, firmware, etc., some examples of which are described below. These are only some examples of different structures that can be used to form the systems, components, generators, detectors, classifiers, and/or logic described above. Other structures can be used as well.

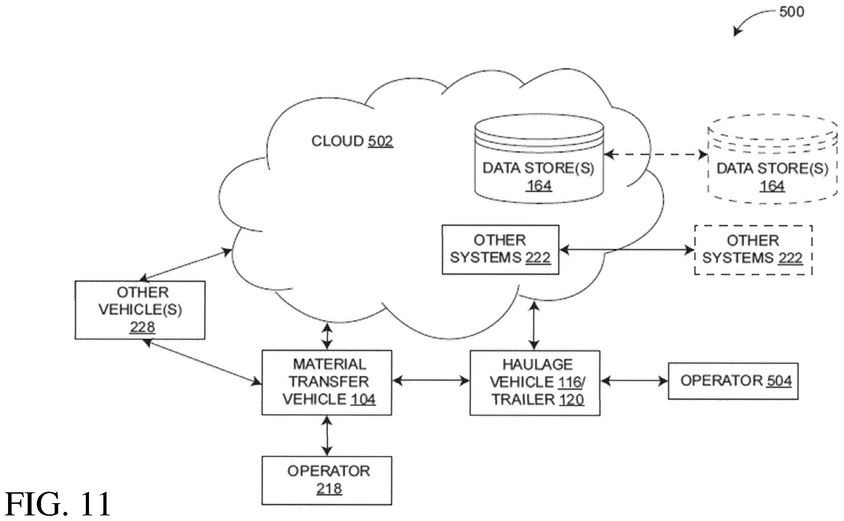

FIG. 11 is a block diagram of agricultural system 100, shown in FIG. 1, except that it communicates with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in previous FIGS. as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or they can be installed on client devices directly, or in other ways.

In the example shown in FIG. 11, some items are similar to those shown in previous FIGS. and they are similarly numbered. FIG. 11 specifically shows that other systems 222 and data store 164 can be located at a remote server location 502. Therefore, unloading control system 126 accesses those systems through remote server location 502.

FIG. 11 also depicts another example of a remote server architecture. FIG. 9 shows that it is also contemplated that some elements of previous FIGS are disposed at remote server location 502 while others are not. By way of example, data store 164 and/or other systems 222 can be disposed at a location separate from location 502, and accessed through the remote server at location 502. Regardless of where the items are located, they can be accessed directly by system 126, through a network (either a wide area network or a local area network), the items can be hosted at a remote site by a service, or the items can be provided as a service, or accessed by a connection service that resides in a remote location. Also, the data can be stored in substantially any location and intermittently accessed by, or forwarded to, interested parties. All of these architectures are contemplated herein.

It will also be noted that the elements of previous FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

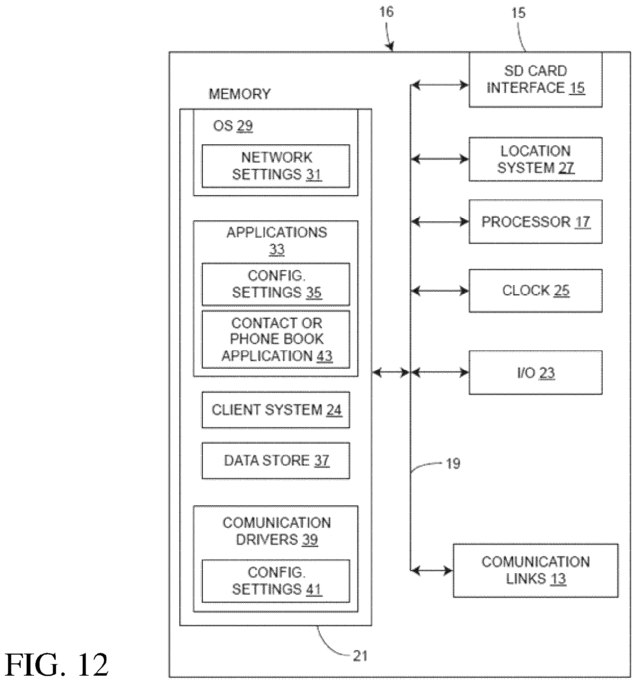

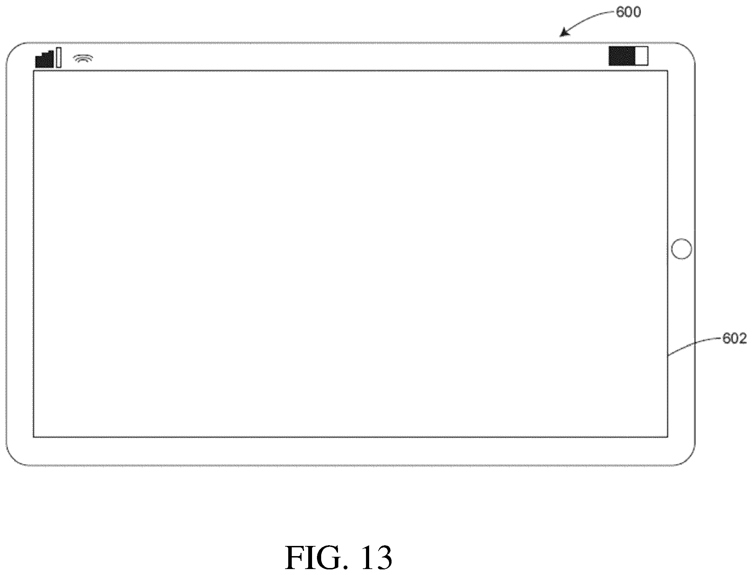

FIG. 12 is a simplified block diagram of one illustrative example of a handheld or mobile computing device that can be used as a user's or client's hand held device 16, in which the present system (or parts of it) can be deployed. For instance, a mobile device can be deployed in the operator compartment of tractor 106 for use in generating, processing, or displaying the door status data. FIGS. 13-14 are examples of handheld or mobile devices.

FIG. 12 provides a general block diagram of the components of a client device 16 that can run some components shown in previous FIGS., that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 13 shows one example in which device 16 is a tablet computer 600. In FIG. 13, computer 600 is shown with user interface display screen 602. Screen 602 can be a touch screen or a pen-enabled interface that receives inputs from a pen or stylus. Computer 600 can also use an on-screen virtual keyboard. Of course, computer 600 might also be attached to a keyboard or other user input device through a suitable attachment mechanism, such as a wireless link or USB port, for instance. Computer 600 can also illustratively receive voice inputs as well.

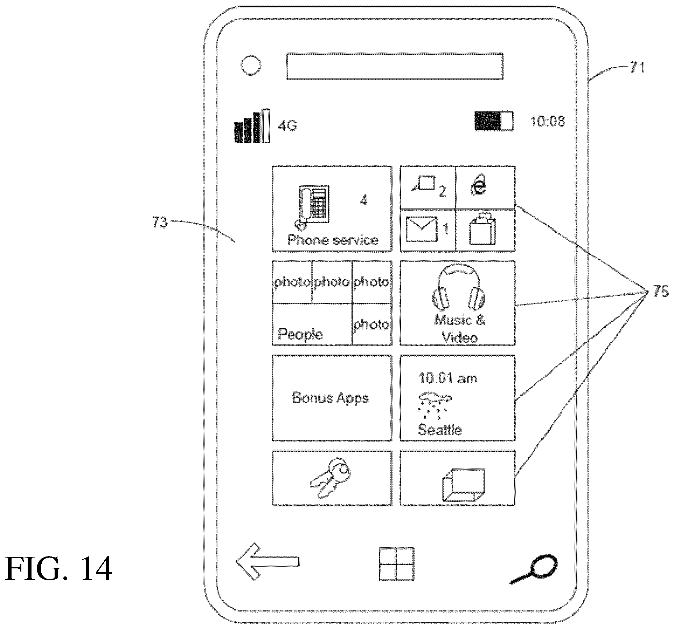

FIG. 14 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

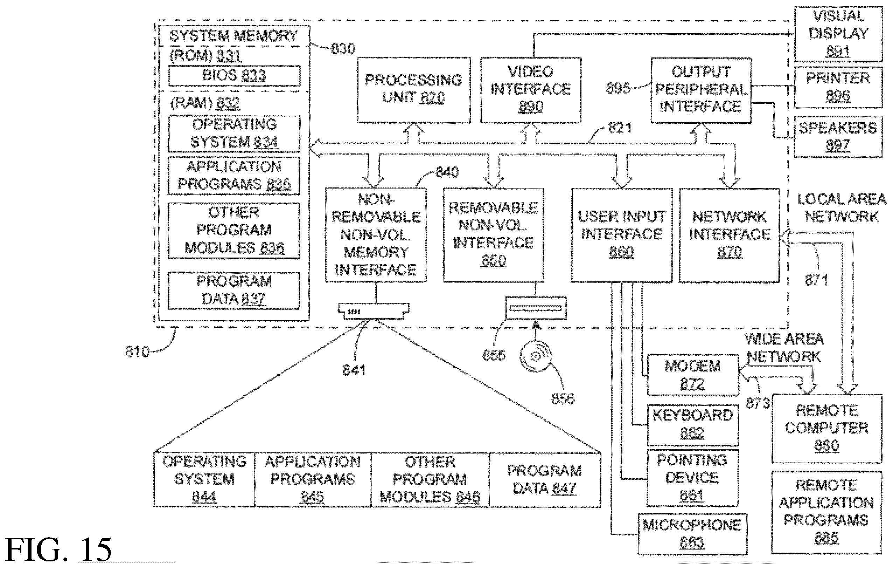

FIG. 15 is one example of a computing environment in which elements of previous FIGS., or parts of it, (for example) can be deployed. With reference to FIG. 15, an example system for implementing some embodiments includes a computing device in the form of a computer 810 programmed to operate as described above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 15.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 15 illustrates operating system 834, application programs 835, other program modules 836, and program data 837.

The computer 810 may also include other removable/non-removable volatile/nonvolatile computer storage media. By way of example only, FIG. 10 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 15, provide storage of computer readable instructions, data structures, program modules and other data for the computer 810. In FIG. 15, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 15 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Embodiments of the invention can be described with reference to the following numbered clauses, with preferred features laid out in dependent clauses:
1. A computer implemented method, comprising:
   detecting a state of an unloading door on a material receiving vehicle; and
   automatically generating a control signal to control a material carrying vehicle, that carries material to be unloaded into the material receiving vehicle, based on the state of the unloading door.
2. The computer implemented method of clause 1 wherein detecting a state of the unloading door comprises:
   capturing a representation of the unloading door with a sensor; and
   performing processing on the captured representation to identify the state of the unloading door.
3. The computer implemented method of clause 2 wherein performing processing comprises:
   receiving the captured representation at a machine learning (ML) -based classifier; and
   generating a classification output with the ML-based classifier, based on the captured representation, indicative of the state of the unloading door.
4. The computer implemented method of clause 3 wherein performing processing comprises:
   extracting a set of features from the captured representation; and
   providing the set of features, as the captured representation, to the ML-based classifier.
5. The computer implemented method of clause 3 or claim 4 wherein the classification output comprises a confidence level and wherein performing processing comprises:
   detecting whether the confidence level meets a threshold confidence level;
   if not, sending the captured representation to a remote ML-based classifier in a remote server environment; and
   receiving a classification output, indicative of the state of the unloading door, from the remote ML-based classifier.
6. The computer implemented method of any preceding clause wherein detecting a state of the unloading door comprises:
   detecting a representation of the unloading door with a sensor;
   generating a three-dimensional (3D) point cloud corresponding to points in the detected representation ; and
   identifying the state of the unloading door based on the 3D point cloud.
7. The computer implemented method of any preceding clause wherein detecting comprises:
   identifying a door status indicator based on a communication from the material receiving vehicle.
8. The computer implemented method of clause 2 or any clause dependent thereon wherein the unloading door comprises a hopper door on a hopper on the material receiving vehicle and wherein capturing a representation comprises:
   capturing an image of an exterior of the hopper on the material receiving vehicle, the image including the hopper door.
9. The computer implemented method of clause 2 or any clause dependent thereon wherein the unloading door comprises a hopper door on a hopper on the material receiving vehicle and wherein capturing a representation comprises:
   capturing an image of an interior of the hopper on the material receiving vehicle, the image including a periphery of an opening that is closed by the hopper door.
10. The computer implemented method of any preceding clause wherein automatically generating a control signal comprises:
   generating an unloading control signal to control an unloading actuator on the material carrying vehicle.
11. The computer implemented method of any preceding clause wherein automatically generating a control signal comprises:
   generating an operator interface control signal to generate an operator alert indicative of
   the state of the unloading door.
12. The computer implemented method of any preceding clause wherein automatically generating a control signal comprises:
   generating a communication control signal to control a communication system on the material carrying vehicle.
13. An agricultural system, comprising:
   a door status detection system configured to detect a state of an unloading door on a material receiving vehicle; and
   a control signal generator configured to automatically generate a control signal to control a material carrying vehicle, that carries material to be unloaded into the material receiving vehicle, based on the state of the unloading door.
14. The agricultural system of clause 13 wherein the door status detection system comprises:
   a sensor configured to capture a representation of the unloading door;
   a machine learning (ML) -based classifier configured to receive the representation of the unloading door and generate a classification output, based on the representation of the unloading door, indicative of the state of the unloading door.
15. The agricultural system of clause 14 wherein the ML-based classifier is configured to generate the classification output with a confidence level and wherein the door status detection system comprises:
   a confidence level analysis system configured to compare the confidence level to a threshold confidence level and generate a comparison output indicative of whether the confidence level meets the threshold confidence level; and
   a remote classifier processing system configured to send the representation of the captured representation to a remote ML-based classifier in a remote server environment and receive a classification output, indicative of the state of the unloading door, from the remote ML-based classifier.
16. A material carrying vehicle, comprising:
   an unloading system actuator configured to control transfer of material out of the material carrying vehicle;
   a door status detection system configured to receive a sensor input and detect a state of an unloading door on a material receiving vehicle based on the sensor input; and
   a control signal generator configured to automatically generate a control signal to control the unloading system actuator on the material carrying vehicle based on the state of the unloading door.
17. The material carrying vehicle of clause 16 and further comprising:
   a vision system configured to capture an image of the unloading door when the material carrying vehicle is positioned relative to the material receiving vehicle such that a field of view of the vision system includes the unloading door.
18. The material carrying vehicle of clause 17 wherein the door status detection system comprises:
   a machine learning (ML) - based classifier configured to receive a representation of the captured image and generate a classifier output indicative of whether the unloading door is open or closed based on the representation of the captured image.
19. The material carrying vehicle of clause 18 wherein the classifier output includes a confidence level and wherein the door status detection system comprises:
   a confidence level analysis system configured to compare the confidence level to a threshold confidence level and generate a comparison output indicative of whether the confidence level meets the threshold confidence level; and
   a remote classifier processing system configured to send the representation of the captured image to a remote ML-based classifier in a remote server environment and receive a classification output, indicative of the state of the unloading door, from the remote ML-based classifier.
20. The material carrying vehicle of any one of clauses 17 to 19 wherein the vision system comprises a camera mounted on the material carrying vehicle.

## Claims

1. A computer implemented method, comprising:
detecting (258) a state of an unloading door on a material receiving vehicle; and
automatically generating (270) a control signal to control a material carrying vehicle, that carries material to be unloaded into the material receiving vehicle, based on the state of the unloading door.

2. The computer implemented method of claim 1 wherein detecting a state of the unloading door comprises:
capturing (260) a representation of the unloading door with a sensor (122); and
performing (260, 262) processing on the captured representation to identify the state of the unloading door.

3. The computer implemented method of claim 2 wherein performing processing comprises:
receiving (284) the captured representation at a machine learning (ML) -based classifier (196); and
generating (288) a classification output with the ML-based classifier, based on the captured representation, indicative of the state of the unloading door.

4. The computer implemented method of claim 3 wherein performing processing comprises:
extracting (286) a set of features from the captured representation; and
providing the set of features, as the captured representation, to the ML-based classifier (196).

5. The computer implemented method of claim 3 or claim 4 wherein the classification output comprises a confidence level and wherein performing processing comprises:
detecting (298) whether the confidence level meets a threshold confidence level;
if not, sending (302) the captured representation to a remote ML-based classifier (224) in a remote server environment; and
receiving (304) a classification output, indicative of the state of the unloading door, from the remote ML-based classifier (224).

6. The computer implemented method of any one of the preceding claims wherein detecting a state of the unloading door comprises:
detecting (260) a representation of the unloading door with a sensor;
generating (262) a three-dimensional (3D) point cloud corresponding to points in the detected representation ; and
identifying (262) the state of the unloading door based on the 3D point cloud.

7. The computer implemented method of any one of the preceding claims wherein detecting comprises:
identifying (264) a door status indicator based on a communication from the material receiving vehicle.

8. The computer implemented method of claim 2 or any claim dependent thereon wherein the unloading door comprises a hopper door on a hopper on the material receiving vehicle and wherein capturing a representation comprises:
capturing (266) an image of an exterior of the hopper on the material receiving vehicle, the image including the hopper door.

9. The computer implemented method of claim 2 or any claim dependent thereon wherein the unloading door comprises a hopper door on a hopper on the material receiving vehicle and wherein capturing a representation comprises:
capturing (260) an image of an interior of the hopper on the material receiving vehicle, the image including a periphery of an opening that is closed by the hopper door.

10. The computer implemented method of any one of the preceding claims wherein automatically generating a control signal comprises:
generating (276) an unloading control signal to control an unloading system (214) on the material carrying vehicle.

11. The computer implemented method of any one of the preceding claims wherein automatically generating a control signal comprises:
generating (274) an operator interface control signal to generate an operator alert indicative of the state of the unloading door.

12. The computer implemented method of any one of the preceding claims wherein automatically generating a control signal comprises:
generating (278) a communication control signal to control a communication system on the material carrying vehicle.

13. An agricultural system, comprising:
a door status detection system (128) configured to detect a state of an unloading door on a material receiving vehicle; and
a control signal generator (130) configured to automatically generate a control signal to control a material carrying vehicle, that carries material to be unloaded into the material receiving vehicle, based on the state of the unloading door.

14. The agricultural system of claim 13 wherein the door status detection system comprises:
a sensor (122) configured to capture a representation of the unloading door;
a machine learning (ML) -based classifier (196) configured to receive the representation of the unloading door and generate a classification output, based on the representation of the unloading door, indicative of the state of the unloading door.

15. The agricultural system of claim 14 wherein the ML-based classifier is configured to generate the classification output with a confidence level and wherein the door status detection system comprises:
a confidence level analysis system (184) configured to compare the confidence level to a threshold confidence level and generate a comparison output indicative of whether the confidence level meets the threshold confidence level; and
a remote classifier processing system (224) configured to send the representation of the captured representation to a remote ML-based classifier in a remote server environment and receive a classification output, indicative of the state of the unloading door, from the remote ML-based classifier.
